# EUROPEAN PATENT APPLICATION

(11) **EP 3 978 780 A1**
(43) Date of publication of application: **06.04.2022**
(21) Application number: 20812520.3
(22) Date of filing: 27.05.2020
(51) Int. Cl.: F16F 9/14, E05F 3/14, A63B 21/008

(54) **ROTATING HYDRAULIC SHOCK ABSORBER (VARIANTS)**

(30) Priority: 28.05.2019 UA 201905856
(71) Applicant: Arabuli, Zviad, Kiev, 02125 (UA)
(72) Inventor: Arabuli, Zviad, Kiev, 02125 (UA)
(74) Representative: Benatov, Samuil Gabriel
(86) International application number: PCT/UA2020/000058
(87) International publication number: WO 2020/242432

(57) **Abstract**

The disclosed invention relates to the mechanical engineering industry, in particular, transport, exercise and medical training machines or appliances and may be used in suspension systems of transport vehicles for damping vibrations, in weight machines for rehabilitation of the human musculoskeletal system, as well as a damper in door or window wing closers. By structural changes in the body and the rotor the invention solves the problem of improving performance and reliability of a rotary fluid damper, in particular, increasing damper stiffness and increasing operating angle of reciprocal rotation of moving components.

The rotary fluid damper consists of a body that is formed by two hermetically connected base members in the form of cups which are directed to each other by their open parts and installed on an axle and are suitable for reciprocal oscillations. Internal surfaces of the body form a cavity in which partitions with transfer holes are installed and divide the cavity into chambers at that one end of each partition is fixed in turn on an internal end face of one or another base member and opposite ends of the partitions remain free. The axle is unloaded and dampening takes place due to oscillations of the base members and transfer of working fluid from one chamber into another.

Another form of the damper is possible in which a body comprises a cylindrical middle hollow base member that is internally divided along its cross section by a rigid partition into two separate leak-tight chambers, at that open parts of the member are hermetically connected with open parts of two end base members in such a manner that the end base members can move independently against the middle member.

## Description

The disclosed invention relates to the mechanical engineering industry, in particular, the transport engineering as well as the engineering of sports or medical devices for physical exercises. The invention may be used in transport vehicles for damping vibrations in suspension systems of transport vehicles with a deficiency of space for installation (for example, telescopic dampers) as well as in compact and versatile weight machines for rehabilitation of the human musculoskeletal system, devices for sports and athletic drills at home gym halls, marine vessels, spacecraft and so on. It can also be used as a damper in door or window wing closers.

For unambiguous understanding of the terms used in the description and claims of the invention their definitions are given below:
**'Damper'** means the device for suppression (damping) of energy of mechanical vibrations in machine or mechanism parts and absorption of shocks or impacts of moving components, in particular, for retaining car wheels on the road and smoothing impacts on transport vehicle bodies, or damping of closing or opening devices. Recently dampers have been widely used in weight machines as means of weight training. In the context of this description the term is tantamount to the shock absorber.
**'Means for attaching to external parts'** means elements that attach a damper to machine or mechanism parts which are required for suppressing (damping) energy of mechanical vibrations.
**'Hub'** means a central part in a base member or midline base member with a hole for installation of an axle.
**'Rod'** means an elongated object that is predominantly an axial or supporting member of other objects.
**'Axle'** means a part of device (a rod) designed for connecting components with each other; it rests upon supports and is used for ensuring rotary motion without torque transmission (unlike a shaft).
**'Shaft'** means a part (in the form of a rod) of machines or mechanisms; it rotates around its longitudinal axis in bearings and is intended for transmitting motion to the attached parts of the machine or mechanism whose component it is; at that it transfers torque along its axis and ensures rotating of machine components arranged on it.
**'Journal'** means a part of an axle; it contacts with a bearing; the journal at the end of an axle is called **'stub'.**

The disclosed invention has been created on the basis of lever-type shock absorbers that have been applied from the beginning of the 20^{th} century. Such shock absorbers are known from the following patents: FR394081A (issued in 1909), US933076 (issued in 1909), US1499660A (issued in 1924), US2584221 (issued in 1952), RU2394176C1 (issued in 2010), JP2012197862A (issued in 2012), UA112592C2 (issued in 2015), UA123643 (issued in 2018). Such a lever-type shock absorber comprises a body with cylindrical boring and a shaft with the diametrically opposite blades at that the shaft is installed in the body boring and can rotate about its axis. As a rule, two partitions are formed in the body boring. These partitions are diametrically directed and make up separate chambers together with the blades. The chambers are filled with working fluid. Holes are made in the partitions. A shaft journal is connected with a suspension lever. If running over an obstacle or pot-hole occurs the lever goes up or down accordingly and rotates the shaft and the blades. Thereafter some chambers decrease their volume and pressure rises in them while other chambers increase their volume and fluid pressure falls in them. The working fluid flows slowly through the holes from the chambers with higher pressure to the chambers with lower pressure. The chamber design provides for a valve device that opens and increases the flow of fluid from one chamber to another chamber when a specified pressure is attained. Such a device may be adjustable or non-adjustable.

The described designs are compact, easy-to-install at transport vehicles but have low performance. They feature a low rate of vibration dampening and are difficult-to-make. Therefore, recently they have been replaced by telescopic dampers (see Dobromirov V.N., Ostretsov A.V. Designs of dampers - M: MGTU 'MAMI', 2007. - 47 p., P.P. 13-15). All designs described above have the inherent drawback that lies in the fact that the above designs absorb impacts through the damper shaft and as a result their bearings are frequently overloaded and fail. Sometimes even the shaft bending occurs. The transport vehicles equipped with such dampers have small travel of the wheels due to small travel of the blade in the damper chamber.

Also a design of rotary fluid damper is known (US2683598, issued in 1954); it differs from the designs described above in the method of fluid carryover which uses a projection on the shaft and a removable plate with profiled surface, at that the plate is fixed in the body and directed to the projection and comprises a crown; at that on impact with the shaft projection the plate minimizes the gap between the projection and the crown and when the crown deviates the gap between the removable plate and the projection increases. The rate of fluid flow through the gap between the projection and the removable plate is higher than the flow rate in the gap between the plate crown and the shaft projection. In such a manner the flow rate of damping fluid, and hence the damping process itself, is regulated. Filling the fluid and air into the two opposite sealed chambers is carried out through filling holes. The described damper as the dampers described earlier is compact, easy-to-install at transport vehicles in particular at aircraft, but it has all deficiencies described above: poor performance, low intensity of vibration dampening and manufacturing complexity.

Also, a rotary fluid damper by patent US4411341(A) (issued in 1983) is known. It is the closest analog to the invention designs that are disclosed. The device is intended for installation between external movable parts and connection with them for damping the relative movement of these parts at least in one direction. The device comprises a body with end faces and one side surface which form a cavity inside the body. As a matter of fact, the cavity cross-section is of the form of circle. The body comprises two radial partitions arranged in the cavity between one internal end face and another internal end face. A rotor is placed inside the body. The rotor is designed with a possibility of oscillations relative to the body. The rotor is in the form of shaft on which elongated blades arranged diametrically in the radial direction are fixed. The blades and the partitions divide the body cavity into chambers. The chambers are filled with working fluid. Holes with valve devices are made in the rotor blades. During relative rotation of the body and the rotor the working fluid flows through the holes from one working chamber with higher pressure to the adjacent chamber with lower pressure. Means for attaching to external parts are arranged on the damper body and the damper rotor.

The closest analog, as the all dampers described earlier, absorbs impacts via the damper shaft therefore it has the same inherent deficiency, low reliability of the damper. The working travel of the damper is limited by angular movement of the shaft which cannot be more than 90° due to its design features. In practice the presence of locking means in the damper for prevention of destruction of the rotor blades or the body partitions further limits the travel. The design features of the closest analog prevent further improvement of the damper's performance and increasing the rate of vibration dampening.

The present invention has an objective to provide such an embodiment of a rotary fluid damper in which a possibility to enhance its performance and reliability by structural alternations of the body and the rotor is ensured, in particular, the possibility to increase damper stiffness or operating angle of relative rotation of movable components up to 270°, if necessary. An increase in the angle of relative rotation of the movable components will ensure a possibility to apply this damper design in weight machines which have improved functionality and prevent any overburden of patients or sportsmen as well as to apply this damper design in door or window wing closers.

Also, the invention is based on an objective to develop another variant of a rotary fluid damper which ensures a damper versatility by means of such structural alterations of the body and the rotor that differ from those specified for the first variant, namely, a possibility to use a single device for two wheels of transport vehicle, and to ensure a possibility to train extremities by moving gym machine levers either unidirectionally or to and fro.

For the first variant of invention the specified objective is attained as follows. In common with the closest analog the disclosed rotary fluid damper comprises a hollow body with end faces and side surface, at that the cavity cross-section is, in effect, of the form of circle, a rod installed in the body between the end faces along a symmetry axis of the cavity and facilities for attaching to the external parts. There are partitions in the body cavity. They are designed in such a manner that divide the body cavity into chambers. The chambers are designed to be suitable for filling them with working fluid and ensure migration of the fluid through transfer holes.

*According to the first variant of invention* the body is made of two base members which are of the form of cups that are directed to each other by their open sides and installed on a rod that is in the form of an axle and are suitable for reciprocal oscillations. The base members are hermetically connected by their open sides in such a manner that their end faces are the body's end faces, their side surfaces form the body's side surface and the internal surfaces form a cavity. The partitions are fixed on an internal end face of one base member in turn, next after one. Their opposite ends have seals and are in contact with the internal end face of the opposite base member. There are transfer holes in the partitions. Means for attaching to external parts are provided on the outer surfaces of the base members.

As compared with the closest analog in the disclosed invention the rotary components are the body parts, that is the base members installed on the axle with a possibility of reciprocal oscillations, but not the shaft with blades. Therefore, in the disclosed damper the axle is unloaded, dampening is caused by oscillations of the base members and transfer of fluid from one chamber to another. This design significantly improves reliability of the damper. Arrangement of the means for attaching to external parts on the outer surfaces of the base members also improves operating conditions of the axle and reliability of the damper. In addition, the damper design provides for setting up several chambers according to its designation and service conditions. This design ensures a possibility to produce dampers of variable stiffness: the greater number of partitions results in the greater damper stiffness. Hence, the disclosed design may be used in transport vehicles, weight machines or shock absorbers in door or window hinge-closers.

*An embodiment of the rotary fluid damper is preferred* if its base members comprise hubs and bearings, which are installed in the corresponding hub ends and contain the axle stubs; at that a bearing is installed in the hub ends, which are proximate to each other, one bearing for two base members, and this bearing ensures the relative motion of the base members. In addition, seals are provided in the peripheral and internal areas of surfaces of the base members which are proximate to each other.

*A possible embodiment of the damper* comprises an axle whose one end is rigidly fixed on the internal end face of one of the base members or made as its integral part. Another base member comprises a hub in which a bearing is installed, at that the bearing retains a stub of the second end of the axle. At that the parts of the base members that are proximate to each other are connected by a bearing which is installed in them and ensures their reciprocal movement, and seals are provided in the peripheral and internal areas of surfaces of the base members which are proximate to each other.

For dampers that are not designed for operation under significant loads and for which the length of travel is important *a preferred embodiment is one* in which each base member design comprises a single partition, that is, there are two partitions in the body cavity. In this case the base members provide a possibility to oscillate within an angular range which can be calculated by formula: 360° / (n-1), where n is the number of partitions. Actually, if the thickness of partitions is taken into account the base members may oscillate in the range of up to 270° that significantly increases the length of travel and is desirable in weight machines or closers of door or window wings. In addition, a valve device may be arranged in one or both partitions. If a valve device is provided in each partition it is desirable to direct the valve devices in the partitions towards each other. This embodiment may be used when an increased force is required for dampening in one direction and a reduced force - in another direction.

*The preferred embodiment of the damper is one* in which a facility for regulating a cross-section area is provided in a transfer hole of the partition as a means for regulating the damper stiffness.

*The preferred embodiment of the damper* with increased damper stiffness *is one* in which torsional or compression springs are provided. The springs may be installed in the body cavity between the partitions or on the outer surface of the body. In the latter case the spring is designed with a possibility to be fixed on the means for attaching to external parts. For example, when levers are external parts the spring is equipped with a means for attaching between the levers.

If there is a need in visualization of forces affected the damper, for example during conduction of diagnosis of transport vehicle running gears, or visualization of muscle work in weight machines, the damper may comprise a pressure transducer installed in the body cavity. In addition, the damper may also comprise a movement pickup or acceleration transducer installed on the outer surface of one of the base members.

For the second variant of invention the specified objective is attained as follows. As the closest analog the second variant of invention comprises a hollow body with end faces and side surface (in fact, a cross-section of the body's internal surface is of the form of circle), a rod installed in the body along its symmetry axis and means for attaching to external parts. The body comprises partitions that divide the body cavity into chambers. The chambers are designed with a possibility to fill them with working fluid and transfer of fluid through transfer holes.

*According to the second variant of invention* the body is made of a hollow middle base member and two outer base members which are of the form of cups and hermetically connected by their open sides with open sides of the middle base member. The base members are installed on a rod (which, in fact, is an axle) in such a manner that end faces of the outer base members are the body's end faces, and side surfaces of the outer and middle base members form the body's side surface. At that the outer base members are installed with a possibility to oscillate against the middle base member. A cross piece is rigidly installed inside the middle base member at right angle to the side surface. At that the cross piece divides the body cavity into two separate hermetical cavities. Partitions are installed in each cavity and in each cavity they are fixed on the internal end face of the outer base member and then on the corresponding surface of the cross piece of the middle base member. At that the opposite ends of the longitudinal partitions have seals and are in contact with the corresponding surface of the cross piece or the internal end face of the outer base member. Transfer holes are designed in the partitions. In addition, means for attaching to external parts are provided on the outside surfaces of the outer base members.

As in the first variant of invention in the second variant of invention the outer base members installed on the axle with a possibility of reciprocal oscillations are rotated but not the shaft with blades. Dampening takes place due to independent oscillations of the outer base members against the middle base member and transfer of fluid from one chamber to another. Such a design of the damper significantly improves its reliability. The existence of two independent chambers make it possible to use a single device for two wheels of transport vehicle or train extremities by moving gym machine levers either unidirectionally or to and fro.

In the preferred embodiment the outer base members and the middle base member have hubs. Bearings for placing the axle stubs are installed in the hubs of the outer base members. Bearings that ensure independent movement of the outer base members against the middle base member are installed at the hub ends of the outer base members which are proximate to the corresponding hubs of the middle base member. Such bearings are, for example, thrust bearing or double-row tapered bearings. For the purpose of ensuring leak-tightness of the chambers seals are provided in the peripheral and internal areas of contiguous surfaces of the outer base members and the corresponding surfaces of the middle base member.

The embodiment of the second variant of damper may comprise an axle that is rigidly fixed in the cross partition of the middle element or made as its integral part. The outer base members comprise hubs and bearings for placing the axle stubs are installed at the corresponding hub ends of the outer base members. Bearings that ensure independent movement of the outer base members against the middle base member are installed at the hub ends of the outer base members which are proximate to the corresponding hubs of the middle base member. In addition, seals are provided in the peripheral and internal areas of contiguous surfaces of the outer base members and the corresponding surfaces of the middle base member.

*The preferred embodiment of the second variant of damper* comprises cavities with two partitions in each cavity. At that, embodiments are possible in which a valve device is installed in one or each of the partitions, as required.

Also *the preferred embodiment of the second variant of damper* may comprise a transfer hole in the partition with a facility for regulating a cross-section area, that is, when there is a need the damper stiffness may be regulated without any changes in the damper design.

As in the first variant of invention, the damper may comprise pressure transducers installed in each body cavity. In addition, the damper may also comprises a movement pickup, or velocity pickup, or acceleration transducer which is installed on the outer surface of one of the base members. Pickup data may be transmitted to any recording devices including mobile ones and monitor displays.

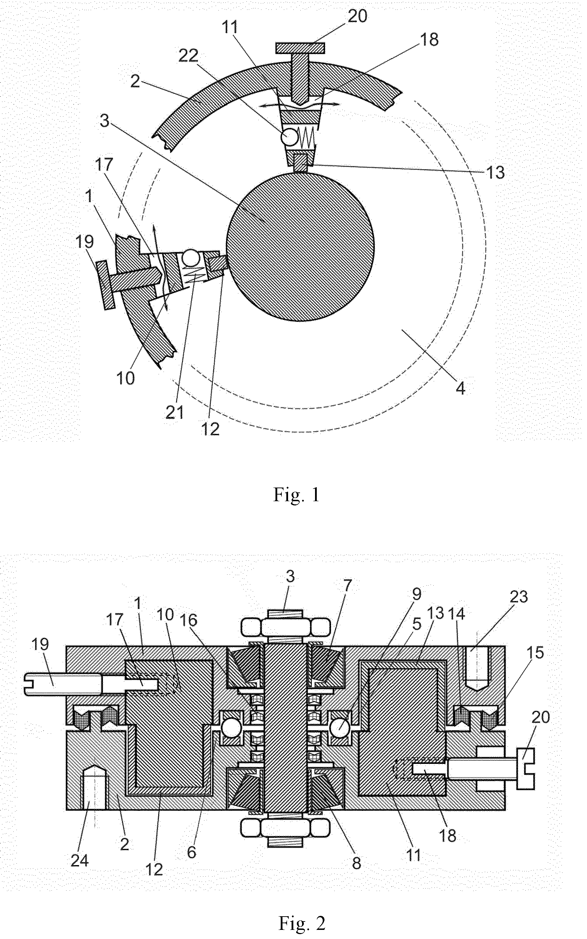

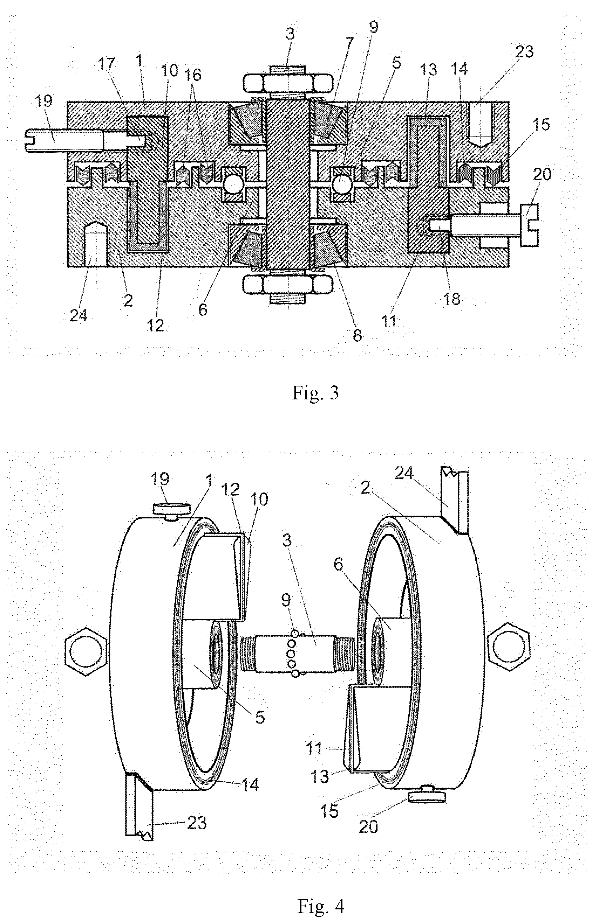

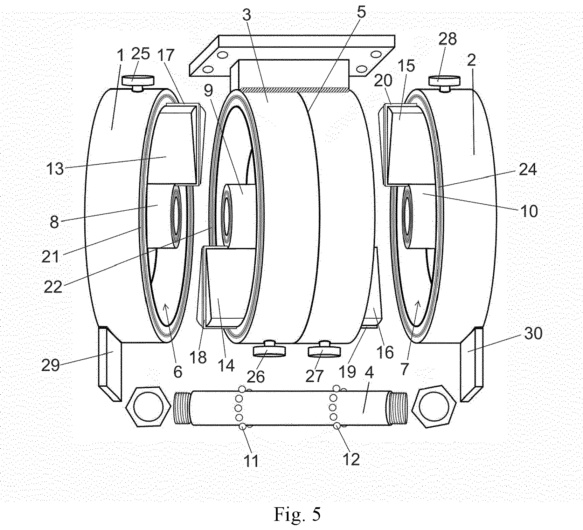

The essence of the invention is explained with the use of examples of actual embodiments and drawings where Fig. 1 shows a schematic view of the damper's cross section explaining its operating principle; Fig. 2 shows a longitudinal section of the first variant of the damper with internal seals on the axle; Fig. 3 shows a longitudinal section of the second embodiment with internal seals in the body of base members for the first variant of invention; Fig. 4 shows an expanded view of the first variant of damper design shown in Fig.2; Fig. 5 shows an expanded view of the second variant of damper.

A damper applied in a weight machine is shown as an example of the actual embodiment of the first variant of invention. The weight machine is designed as a rotary fluid damper, it comprises a hollow body that consists of two base members **1** and **2**, which are of the form of cups that are directed to each other by their open sides. The base members **1** and **2** are installed on an axle **3** and hermetically connected by their open sides in such a manner that their end faces are the body's end faces, their side surfaces form the body's side surface, The internal surfaces form a cavity **4** whose cross section is in the form of circle. The axle **3** is installed along a symmetry axis of the cavity **4** and designed in such a manner that the base members **1** and **2**, have a possibility to free oscillate against each other while retaining on the axle.

The partitions are fixed on an internal end face of one base member in turn, next after one. Their opposite ends have seals and are in contact with the internal end face of the opposite base member. There are transfer holes in the partitions. Means for attaching to external parts are provided on the outer surfaces of the base members. Reciprocal oscillations may be attained as Fig.2 or Fig. 3 shows where the base members may oscillated against each other while the axle **3** may remain immovable. The axle may be even fixed on an immovable support. An embodiment is possible in which the axle **3** is designed as an integral part of the base member and oscillates simultaneously with this member.

Hubs **5** and **6** are formed in the base members **1** and **2**. Bearings **7** and **8** are installed in the hubs. These bearings, e.g. taper roller bearings, receive axial and radial loads, as shown in Fig. 2 or Fig. 3. Stubs of the axle **3** are installed in the bearings. A bearing **9** is installed on the axle between the hubs, it is a single bearing for the both base members which ensures their relative movement. In the example of the actual embodiment shown in Fig. 2 or Fig. 3 a thrust ball bearing is installed. Two partitions **10** 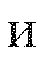 **11** are installed in the cavity **4**. One end of the partition **10** is irremovably fixed on the internal end face of the base member **1** and the opposite end of the partition **10** is free and has a seal **12** which is in contact with the internal surface of the opposite base member **2**. One end of the partition **11** is irremovably fixed on the internal end face of the base member **2** and the opposite end of the partition **11** is free and has a seal **13**. The partitions divide the body cavity into two chambers. When such a damper is used in transport vehicles the number of partitions may be more than two. Under operating conditions the chambers are filled with working fluid. Machine oil may be used as working fluid. Leak-tightness of the chambers is ensured by seals **14**, **15** which are installed on a peripheral area of contiguous with each other surfaces of the base members **1** and **2** and seals **16** installed either on the axle **3** between the bearings **7**, **8** (as shown in Fig. 2) or in the body of the base members **1** and **2** (as shown in Fig. 3). The seals make tight the internal part of the chambers. Transfer holes **17** and **18** are provided in the partitions **10** and **11**. The damper may be designed with transfer holes either in a single partition or in the both partitions in accordance with purposes for which a gym machine is intended. Each of the transfer holes **17** and **18** has a facility (**19** and **20** respectively) for adjusting the cross section area of the transfer hole. Fig 1 shows that adjusting screws **19** and **20**, which are screwed in thread holes on the side surfaces of the base members, may be such facilities. If working fluid is absent in the cavity or its quantity is not sufficient it may be filled in through these holes at the stage of setting up of the damper. The chambers of the damper may be filled with working fluids of various viscosity depending on the required damper stiffness. Valve devices **21**, **22** are additionally arranged in the partitions. They are aligned toward each other. Torsional or compression springs may be provided for increasing damper stiffness in the structure (are not shown in the drawings). Such springs may be easily installed or removed as required. Facilities **23** and **24** for attaching to external parts are provided on the outer surface of the base members **1** and **2**. The facilities for attaching to external parts may be in the form of places for screw fastening or welding or in the form of levers. Fig. 2 and Fig. 3 show the facilities **23** and **24** for attaching to external parts that are implemented as holes for fastening of levers. Figs. 4 and 5 show the facilities in the form of levers.

The gym machine-damper operates as follows. At the preliminary stage the cavity chambers **4** are filled with working fluid. A patient or sportsman takes the levers by hands and moves them apart and together in turn. At that the base members **1** and **2** revolve against each other together with the partitions **10** and **11**. At that the volume of one chamber decreases with a corresponding increase in internal pressure and the volume of another chamber increases with a corresponding decrease in pressure. Fluid from the chamber with increased pressure flows into the chamber with reduced pressure via the transfer hole **17** or **18**. The force required to move the levers apart and together and hence the load force affecting muscles of the patient or sportsman may be regulated by the screws **19**, **20** depending on viscosity of working fluid and the cross section of the transfer hole. At that the amount of effort upon movements will be the same both in one direction and the opposite direction. It enables training of opposite sets of muscles. When the partitions are provided with valve devices **21** and **22**, which are directed towards each other, it is possible to obtain 'idle' running and 'working' running that is the movement in one direction will be accompanied by opening of the valves (ease movement) and the movement in the opposite direction will be at the closed valves (on-load). When only one lever is required for training the idle base member may be fixed to an unmovable support. In this case an embodiment of the damper with one base member which is made unmovable in regards to the axle will be advisable.

The gym machine-damper has the following advantages: versatility, reliability and possibility to regulate loads without device retrofitting. In gym machines with two partitions an angle of rotation of the base members may be up to 270°. At that overloading and traumatization of patients are impossible. When a sportsman trains with the use of bench pressing exercises and feels that his muscles are tired there is no need to hold a barbell some time for preventing its falling, he simply releases the levers.

When a larger load is required a torsional or compression spring may be easily installed between the levers. When loads shall be controlled a pressure transducer (it is clear that for this purpose the gym machine shall comprise a special hole) may be easily set into a gym machine or movement pickup or acceleration transducer may be easily installed on the outer surface of the base member. Pickup data may be transmitted to any recording devices or monitor displays.

The disclosed damper design may operate for the purpose specified as a device for dampening energy of mechanical vibrations and absorbing of shocks and impacts exerted by moving elements. Generally, several partitions and additional torsional and compression springs are used in dampers intended for transport vehicles. At that the dampers operate in the same way as described above. The disclosed damper design that operates in the same way as described above is used to open and close door wings. Valve devices **21, 22** are installed towards each other in the damper partitions. In opening they operate in the idle mode and in closing -in the operating mode holding back the closing wings.

The second variant of damper embodiment whose structural design is shown in Fig. 5 is used for extra large transport vehicles or more versatile gym machines. The damper comprises a hollow body consisting of two end base members **1** and **2** and a hollow middle base member **3**. The end base members are in the form of cups whose open parts are hermetically attached to open parts of the middle base member **3**. All base members are installed on an axle **4** in such a manner that end faces of the end base members are end faces of the body and side surfaces of the end base members and internal surface of the base members form a cavity whose cross section is in the form of circle. A cross piece **5** is rigidly installed inside the middle base member **3** perpendicular to the side surface. This piece divides the body cavity into two separate leak-tight cavities **6** and **7**. In the damper shown on Fig. 5 the middle base member **3** is made up of two similar end base members, at that their end faces serve as a partition **5**. An embodiment is possible in which a separate partition is rigidly fixed in a tubular element. The axle may be consisted of two parts for each end base member and the corresponding part of the middle base member or it may be integral then a hole for the axle **4** shall be made in the partition **5**. The axle **4** is installed along the cavity's symmetry axis and designed in such a manner that the end base members **1** and **2** have a possibility to oscillated free against the middle base member **3**. For this purpose hubs **8, 9, 10** are provided in the end base members **1** and **2** and the middle base member **3**. Bearings (not shown in Fig. 5) are installed in the hubs of the end base members, at that they take up axial and radial loads and stubs of the axle **4** are installed in them. In addition, the ends of the hubs **8** and **10** of the end base members **1** and **2** that are proximate to the corresponding bearings **9** of the middle base member **3** are installed in bearings **11** and **12**, respectively, for example, in thrust ball bearings. Namely these bearings ensure independent movement of the end base members **1** and **2** against the middle base member **3**. If necessary, the middle base member **3** may be designed as an integral part with the axle **4**. Two partitions are installed in each cavity **6** or **7**, **13** and **14** or **15** and **16** respectively. One end of the partition **13** and one end of the partition **15** are permanently attached to the internal surfaces of end base members **1** and **2**, respectively. The opposite ends of the partitions **13** and **15** have seals **17** and **20** and are in contact with the corresponding surface of the cross piece **5** of the middle base member **3.** One end of the partition **14** and one end of the partition **16** are permanently attached to the corresponding internal surfaces of the cross piece **5** of the middle base member **3**. The opposite ends of the partitions **14** and **16** have end seals **18** and **19** and are in contact with the corresponding internal surface of the end base members **1** and **2**.A leak-tight connection of the chambers in the peripheral area of the base members (the end ones and the middle one) is provided by seals **21**, **22**, **23**, **24** (the seal **23** is not shown in Fig. 5) that are installed in each end base member **1** and **2** and in the corresponding proximate part of the middle base member **3**. The internal parts of the base members is also tightened by seals (Fig. 5 does not show such seals as the seal **16** installed on the axle for the first variant of the invention (see Fig. 2) or the seals **16** installed in the body of the base members (see Fig. 3) and on the corresponding proximate surfaces of the middle base members). The partitions **13** and **14** as well as **15** and **16** divide each cavity, **6** and **7** respectively, into two chambers. Under operating conditions the chambers are filled with working fluid. Machine oil may be used as working fluid. A possible embodiment of the damper may comprise more partitions in the cavities. Transfer holes are provided in the partitions **13**, **14**, **15,** and **16** ( not shown in Fig. 5; see the holes **17** and **18** for the first variant in Fig 1). Each transfer hole is provided with a facility to regulate a cross-section area of the transfer hole (**25**, **26**, **27**, and **28** respectively). Additional valve devices are installed in the partitions (not shown in Fig. 5; see **21** and **22** for the first variant in Fig. 1). Means **29** and **30** for attaching to external parts are provided on the outer surfaces of the end base members **1** and **2**. If loads shall be under control, the damper design may be equipped with pressure transducers (for this purpose a special hole shall be provided in the damper) and/or movement pickups to be installed on an outer surface of a end member (not shown in Fig. 5). The pickups may be equipped with recording devices that is important for diagnosis of a degree of wear and tear of transport vehicle dampers carried out at maintenance facilities or for monitoring of patients and sportsmen in gym machines.

A damper installed on a transport vehicle operates as follows. The damper's middle base member 3 is rigidly fixed on the transport vehicle's frame. One end of each lever is attached to the means 29 and 30; other ends are attached to the corresponding wheel suspensions. When one wheel runs over a road unevenness it rises or falls and pulls the lever connecting the wheel suspension and the damper, respectively. The lever rotates and turns one end base member, for example, **1**. The base member **1** rotates together with the partition **13**. Fluid in one chamber of the cavity **6** is forced out through a transfer hole in the partition **13** into the adjacent chamber with reduced pressure. The transfer hole diameters are preliminary adjusted to attain the required damper stiffness and ensure smooth ride of the transport vehicle. When a pressure rise is significant a valve device opens in the chamber to speed the flow of working fluid from chamber to chamber and facilitate operation of the damper. Dampening of vibrations, shocks and impact of the transport vehicle body takes place. The damper also prevents swinging of the transport vehicle on springs upon riding on an uneven road. If a wheel runs over a stone the end base member **1**, which is connected with this wheel by a lever, rotates in one direction, in a case of a pit it rotates in the opposite direction. The mechanism of damping remains the same and a reliable contact between the wheel and the road is maintained. Another end base member **2** operates independently of the first base member, therefore the second wheel whose suspension is connected with the attaching means **30** by a lever operates independently of the first wheel. Thus, a single damper may be used for two wheels. At that, it may be applied for two front or two rear wheels as well as two left or two right wheels, for example, in quadrunners. In also may be used in two-wheeled transport vehicles. The damper may be used not only in wheeled vehicles but also in ski-equipped self-propelled vehicles.

In the same manner the second variant of the damper may be used as a gym machine. At that the middle base member is attached fixedly on a foundation. A patient or sportsman may train extremities by moving levers of a gym machine one way or back and fro. That is such a gym machine design improves its versatility.

## Claims

1. A rotary fluid damper comprising a hollow body with end faces and side surface whose cross section is essentially in the form of a circle, a rod installed in the body along the symmetry axis of the cavity, means for attaching to external parts, partitions arranged in the body in such a manner that they divide the body cavity into chambers, at that the chambers are designed with a possibility to fill them with working fluid and transfer fluid through transfer holes,
***characterized in that***
the body consists of two base members that are in the form of cups directed to each other by their open parts and joined between themselves in such a manner that their end faces are the end faces of the body, their side surfaces form the body's side surface, and internal surfaces form a cavity, at that the base members are installed on a rod which serves as an axle while the members are able to oscillate against each other, partitions whose one end is fixed and such ends are fixed in turn, next after one, on the internal end face of one base member then in the internal end face of another base member while their opposite ends have seals and are in contact with the internal end face of the opposite base member, transfer holes which are made in the partitions, and means for attaching to external parts which are arranged on the outer surface of the base members.

2. The rotary fluid damper of claim 1, *wherein* hubs are designed in the base members at that bearings which support the axle stubs are installed in the hubs while a bearing is installed in the hub ends which are proximate to each other and this bearing ensures reciprocal movement of the base members, and in addition seals are installed in peripheral and internal parts of the surfaces of the base members which are proximate to each other.

3. The rotary fluid damper of claim 1, *wherein* one end of the axle is rigidly fixed on the internal end face of the first base member or designed as it integral part, the second base member comprises a hub in which a bearing that supports a stub of the second end of the axle is installed, at that parts of the base members which are proximate to each other and connected between themselves by a bearing which is installed in them and ensures their reciprocal movement and along with that seals are installed

4. The rotary fluid damper according to one of claims 1 to 3, *wherein* the damper comprises two partitions in the cavity and a valve device is provided in one of the partitions.

5. The rotary fluid damper according to one of claims 1 to 3, *wherein* there are two partitions in the cavity and in each partition a valve device is provided at that the valve devices in the partitions are directed towards each other.

6. The rotary fluid damper according to one of claims 1 to 5, *wherein* the transfer hole in the partition comprises a facility to adjust the cross-section area.

7. The rotary fluid damper according to one of claims 1 to 6, *wherein* it comprises a torsional or compression spring located in the body between the partitions.

8. The rotary fluid damper according to one of claims 1 to 6, *wherein* it comprises a torsional or compression spring located on the outer surface of the body at that the spring is designed with a possibility to attach it to the means for attaching with the outer surface.

9. The rotary fluid damper according to one of claims 1 to 8, *wherein* it comprises a pressure transducer installed in the body cavity.

10. The rotary fluid damper according to one of claims 1 to 9, *wherein* it comprises a movement pickup, or speed pickup, or acceleration pickup installed on the outer surface of one of the base member.

11. A rotary fluid damper which comprises a hollow body with end faces and side surface whose cross-section is essentially in the form of a circle, a rod installed in the body along the symmetry axis, means for attaching to external parts, partitions arranged in the body in such a manner that they divide the body cavity into chambers, at that the chambers are designed with a possibility to fill them with working fluid and transfer fluid through transfer holes,
***characterized in that***
the body consists of a middle base member and two end base members in the form of cups whose open parts are hermetically connected with open parts of the middle base member, the base members are installed on a rod in the form of an axle in such a manner that end faces of the end base members are the end faces of the body and side surface of the end and middle base members form the body's side surface at that the end base members are installed with a possibility to oscillate against the middle base member, a cross piece is rigidly installed inside the middle base member perpendicular to the side surface, at that the cross piece divides the body cavity into two separate leak-tight cavities and partitions are installed in each cavity, at that one end of each partition is fixed and such ends are fixed in turn, next after one, on the internal end face of the end base member then on the corresponding surface of the cross piece of the middle base member, while the opposite ends of the partitions have seals and are in contact with the corresponding surface of the cross piece of the middle base member or the internal end face of the end base member, transfer holes which are made in the partitions, and means for attaching to external parts which are arranged on the outer surface of the end base members.

12. The rotary fluid damper of claim 11, *wherein* hubs are provided in the end and middle base members at that bearings supporting axle stubs are installed in the hubs of the end base members and bearings which ensure independent movement of the end base members against the middle base member are installed in the ends of the hubs of the end base members which are proximate to the corresponding hubs of the middle base member as well as in the specified corresponding hubs of the middle base member, at that seals are installed in peripheral and internal parts of the surfaces of the end base members which are proximate to the corresponding surfaces of the middle base member.

13. The rotary fluid damper of claim 11, *wherein* the axle is rigidly fixed in the cross piece of the middle base member or designed as an integral part of the piece, hubs are provided in the end base members in which bearings supporting axle stubs are installed and bearings which ensure independent movement of the end base members against the middle base member are installed in the ends of the hubs of the end base members which are proximate to the corresponding surfaces of the middle base member, in addition, seals are installed in peripheral and internal parts of the surfaces of the end base members which are proximate to the corresponding surfaces of the middle base member.

14. The rotary fluid damper according to one of claims 11 to 13, *wherein* there are two or more partitions in each cavity and a valve device is installed in one of the partitions located in each cavity.

15. The rotary fluid damper according to one of claims 11 to 13, *wherein* there are two or more partitions in each cavity and a valve device is installed in each partition.

16. The rotary fluid damper according to one of claims 11 to 15, *wherein* a transfer hole in the partition has a means for adjusting the cross-section area of the hole.

17. The rotary fluid damper according to one of claims 11 to 16 *wherein* there are pressure transducers installed in each separate cavity.

18. The rotary fluid damper according to one of claims 11 to 17, *wherein* there are movement, speed or acceleration pickups installed on the outer surface of each end base member.
